Europäisches Patentamt

European Patent Office

Office européen des brevets

(11) Veröffentlichungsnummer: **0 305 317**
**A1**

## (12) EUROPÄISCHE PATENTANMELDUNG

(21) Anmeldenummer: 88730180.2

(22) Anmeldetag: 12.08.88

(51) Int. Cl.⁴: **B 41 J 3/04**
**B 29 C 37/00**

(30) Priorität: 28.08.87 DE 3729205

(43) Veröffentlichungstag der Anmeldung:
01.03.89 Patentblatt 89/09

(84) Benannte Vertragsstaaten:
AT BE CH DE ES FR GB GR IT LI LU NL SE

(71) Anmelder: Siemens Aktiengesellschaft Berlin und
München
Wittelsbacherplatz 2
D-8000 München 2 (DE)

(72) Erfinder: Dreinhoff, Karl-Heinz, Dipl.-Ing.
Alsterweg 55b
D-1000 Berlin 37 (DE)

Schulz, Harald, Dipl.-Ing.
Stormstrasse 1
D-1000 Berlin 19 (DE)

(54) Verfahren zum Ausbilden von Tintenkanälen in einem Schreibkopf für eine Tintenmosaikschreibeinrichtung.

(57) Bei einem Verfahren, bei dem zum Ausbilden von Tintenkanälen in einem Schreibkopf für eine Tintenmosaikschreibeinrichtung jeweils trennmittelbeschichtete und von piezoelektrischen Antriebselementen zylindrisch umfaßte Formnadeln in einer Gießform entsprechend dem gewünschten Verlauf der auszubildenden Tintenkanäle ausgerichtet werden, mit einer Gießmasse umgossen werden und nach deren Aushärten unter Bildung der jeweils von den zugeordneten piezoelektrischen Antriebselementen teilweise umfaßten Tintenkanäle entfernt werden, soll in fertigungstechnisch einfacher Weise eine Isolation der Antriebselemente gegenüber einer Schreibflüssigkeit in den Tintenkanälen erzielt werden.

Auf den trennmittelbeschichteten Formnadeln (6) wird vor ihrem Einbringen in die Gießform (1) jeweils eine Hüllschicht (12) aufgebracht, die nach Entfernung der Formnadeln (6) und des Trennmittels die Kanalinnenwand des betreffenden Tintenkanals (10) bildet.

Das neue Verfahren dient zur Herstellung von Tintenschreibköpfen, die nach dem Prinzip des Einzeltropfenausstoßes (drop on demand) arbeiten.

FIG 1

**Beschreibung**

## Verfahren zum Ausbilden von Tintenkanälen in einem Schreibkopf für eine Tintenmosaikschreibeinrichtung

Die Erfindung betrifft ein Verfahren, bei dem zur Ausbildung von Tintenkanälen in einem Schreibkopf für eine Tintenmosaikschreibeinrichtung jeweils mit einem Trennmittel beschichtete und von piezoelektrischen Antriebselementen zylindrisch umfaßte Formnadeln in einer Gießform entsprechend dem gewünschten Verlauf der auszubildenden Tintenkanäle ausgerichtet werden, mit einer Gießmasse umgossen werden und nach deren Aushärten unter Bildung der jeweils von den zugeordneten piezoelektrischen Antriebselementen teilweise umfaßten Tintenkanäle entfernt werden.

Bekannte Schreibköpfe für Tintenmosaikschreibeinrichtungen (vgl. DE-PS 25 43 451), die nach dem Prinzip des Einzeltropfenausstoßes (drop on demand) arbeiten, enthalten als Antriebselemente zum Ausstoß von Tintentropfen aus Tintenkanälen einzeln ansteuerbare Röhrchen aus piezokeramischem Material, von denen jedes jeweils einen im Inneren des Schreibkopfes verlaufenden Tintenkanal über einen Teil seiner Länge umfaßt; bei Ansteuerung eines der Antriebselemente verengt sich dieses, wodurch aus dem zugeordneten Tintenkanal ein Tintentropfen ausgestoßen wird.

Zum Aufbau eines derartigen Schreibkopfes ist es aus der DE-PS 25 43 451 bekannt, die Antriebselemente auf Formnadeln aufzustecken und die Nadeln entsprechend dem gewünschten Verlauf der Tintenkanäle in einer Gießform auszurichten; anschließend wird die Gießform mit einer Gießmasse ausgefüllt und nach deren Aushärten die Formnadeln entfernt. Um zu verhindern, daß die Antriebselemente in direkten Kontakt mit der Schreibflüssigkeit in den Tintenkanälen geraten, was zum Eindringen der Schreibflüssigkeit in die poröse Keramik der Antriebselemente und daraus resultierenden Kurzschlüssen führen kann, werden in die Antriebselemente vor ihrem Vergießen metallene Schutzröhrchen eingesteckt und zusammen mit den Antriebselementen auf die Formnadeln aufgezogen, so daß in dem fertigen Schreibkopf die Schutzröhrchen die sie umgebenden Antriebselemente gegenüber dem Inneren der zugeordneten Tintenkanäle isolieren. Die im Hinblick auf die Eigenstabilität der Schutzröhrchen relativ dicke Wandstärke der Schutzröhrchen erfordert jedoch eine relativ hohe Ansteuerenergie für die Antriebselemente. Außerdem erschwert die relativ dicke Wandstärke der Schutzröhrchen die Zusammenführung der Tintenkanäle zu einem engen Kanalaustrittsraster (Düsenraster) insbesondere dann, wenn die Antriebselemente möglichst nahe zu den Kanalaustritten der Tintenkanäle angeordnet sein sollen. Schließlich kann in einen Spalt zwischen der Formnadel und dem zugehörigen Ansteuerelement undefiniert Gießmasse eindringen und nach dem Entfernen der Formnadel eine rauhe Kanalinnenwand bilden. Entsprechendes gilt für eine weitere, aus der DE-OS 25 43 420 bekannte Verfahrensvariante, bei der die Antriebselemente jeweils vor ihrer Anordnung auf den Formnadeln mit einer Isolierschicht beschichtet werden.

Bei einer ebenfalls aus der DE-OS 25 43 420 bekannten Verfahrensvariante zur Ausbildung der Tintenkanäle in dem Schreibkopf werden die Antriebselemente unter Zwischenfügung jeweils einer Drahtwendel auf die zugehörigen Formnadeln aufgesteckt, so daß beim nachfolgenden Vergießen die Gießmasse in die Zwischenräume zwischen den Antriebselementen und den zugehörigen Formnadeln eindringt und so eine das betreffende Antriebselement gegenüber dem Kanalinneren isolierende Schutzschicht bildet. Jedoch ist die Homogenität der Schutzschicht durch die Drahtwendel gestört, so daß nicht auszuschließen ist, daß Partikel der Gießmasse beim Entfernen der Formnadeln oder später bei Ansteuerung der Antriebselemente durch die daraus resultierenden Druckpulse ausbröckeln können.

Der Erfindung liegt die Aufgabe zugrunde, die Antriebselemente auf fertigungstechnisch einfache Weise unter Bildung durchgehend glatter Kanalinnenwände gegenüber der Schreibflüssigkeit in den Tintenkanälen zu isolieren.

Gemäß der Erfindung wird diese Aufgabe dadurch gelöst, daß auf die trennmittelbeschichteten Formnadeln vor ihrem Einbringen in die Gießform jeweils eine Hüllschicht aufgebracht wird, die nach Entfernung der Formnadeln und des Trennmittels die Kanalinnenwand des betreffenden Tintenkanals bildet.

Ein wesentlicher Vorteil des erfindungsgemäßen Verfahrens besteht darin, daß mit der Ausbildung der Hüllschichten auf den Formnadeln jeweils über die Länge der zu bildenden Tintenkanäle zumindest aber im Bereich der Antriebselemente glatte tintenundurchlässige Kanalinnenwände der Tintenkanäle geschaffen werden, weil die Hüllschichten von der Schrumpfung der Gießmasse bei ihrem Aushärten nicht betroffen sind. Im Bereich der Kanalinnenwände durch Schrumpfung gelockerte Bereiche der aushärtenden Gießmasse, wie sie insbesondere bei Verwendung von Drahtwendeln zur elektrischen Kontaktierung der Antriebselemente und ihrer Zentrierung auf den Formnadeln auftreten können, werden durch die Hüllschichten in vorteilhafter Weise stabilisiert. Dadurch, daß die Hüllschichten auf den Formnadeln aufgebracht werden, benötigen sie im Unterschied zu Schutzröhrchen (vgl. DE-OS 25 43 420) keine mechanische Eigenstabilität und ermöglichen daher eine unproblematische Handhabung bei der Herstellung, Lagerung und Montage. Die Wandstärke der Hüllschichten kann daher sehr gering gehalten werden, so daß bei Verwendung von Antriebselementen mit entsprechend geringer Röhrchenöffnungsweite eine gute Impulsübertragung von den Antriebselementen auf die Schreibflüssigkeit in den Tintenkanälen erreicht wird. Darüber hinaus ist das erfindungsgemäße Verfahren insbesondere auch zur Herstellung gekrümmter Tintenkanäle geeignet.

Als Hüllschicht wird in vorteilhafter Weise eine Kunststoffschicht aufgebracht, die gegenüber der Schreibflüssigkeit resistent und dicht ist, ferner durch die Schreibflüssigkeit benetzt wird und ein gutes Haftungsvermögen mit der Gießmasse aufweist. Hierzu können die trennmittelbeschichteten Formnadeln beispielsweise in eine Kunststofflösung eingetaucht werden.

Entsprechend einer Verfahrensvariante kann im Rahmen der Erfindung als Hüllschicht eine Metallschicht aufgebracht werden. Der Vorteil einer metallenen Hüllschicht besteht in ihrer Verwendbarkeit als elektrischer Anschluß für die Antriebselemente und in dem guten mechanischen Impulsübertragungsverhalten. Darüber hinaus wurde festgestellt, daß infolge der Elastizität der metallenen Hüllschicht bei Ansteuerung der Antriebselemente die zwischen den Ansteuerelementen und der Hüllschicht eingedrungene Gießmasse lediglich Druckbeanspruchungen unterliegt, so daß in diesem Bereich verhindert wird, daß sich die Gießmasse lockert. Die metallene Hüllschicht kann auf die Formnadeln wahlweise aufgewalzt oder galvanisch abgeschieden werden; im letzteren Fall ist vorher ein Überziehen der darunter liegenden Trennmittelschicht mit einer Leitschicht oder die Verwendung eines leitfähigen Trennmittels erforderlich.

Entsprechend einer vorteilhaften Weiterbildung des erfindungsgemäßen Verfahrens wird vor dem Aufbringen der Hüllschicht eine spülmittellösliche Zwischenschicht auf der Trennschicht aufgebracht und nach dem Entfernen der Formnadeln zusammen mit dem Trennmittel aus den Tintenkanälen ausgespült. Während die Trennschicht - beispielsweise ein thermoplastischer Kunststoff geringer Festigkeit, ein anorganisches Material geringer Schubfestigkeit oder eine niedrigschmelzende Metallegierung - die Entformbarkeit der Formnadeln gewährleistet, ermöglicht die Zwischenschicht eine rückstandslose Reinigung der Kanalinnenwände nach dem Entfernen der Formnadeln. Als Spülmittel kann beispielsweise ein die Zwischenschicht lösendes Lösungsmittel oder bei einer wasserlöslichen Zwischenschicht einfaches Wasser Verwendung finden.

Um bei dem zu fertigenden Schreibkopf die Anordnung der Kanalaustritte in einem engen Düsenraster zu ermöglichen, ist es erforderlich, die Formnadeln mit ihren Spitzen eng zusammenzuführen. In diesem Zusammenhang ist gemäß einer Weiterbildung des erfindungsgemäßen Verfahrens vorgesehen, daß die die Kanalaustrittsbereiche der Tintenkanäle bildenden Spitzen der Formnadeln von der Trennschicht und der Hüllschicht unbedeckt gelassen werden und daß der Endbereich der Trennschicht vollständig mit der Hüllschicht überdeckt wird. Dadurch, daß die Spitzen der Formnadeln unbeschichtet bleiben, lassen sie sich in einem engen Düsenraster anordnen. Die die Trennmittelschicht in ihrem Endbereich vollständig überdeckende Hüllschicht verhindert beim Ausgießen der Gießform mit der Gießmasse, daß die Gießmasse in einen sich durch Schmelzen der Trennschicht möglicherweise bildenden Spalt zwischen der Formnadel und der Hüllschicht einfließt.

Bei einer Verfahrensmodifikation, die ebenfalls eine Anordnung der Kanalaustrittsbereiche in einem engen Düsenraster ermöglicht, werden die die Kanalaustrittsbereiche der Tintenkanäle bildenden Spitzen der Formnadeln von der Trennschicht und der Hüllschicht unbedeckt gelassen und mit einer den Endbereich der Hüllschicht bedeckenden zweiten Trennschicht überzogen. Die zweite Trennschicht ist dabei so dünn, daß sie eine Zusammenführung der Spitzen der Formnadeln zu einem engen Düsenraster ermöglicht; zugleich gewährleistet die zweite Trennschicht eine leichte Entformbarkeit der Formnadeln und verhindert ein Eindringen der Gießmasse in einen Spalt zwischen der Hüllschicht und der Formnadel, der sich durch Schmelzen der ersten Trennschicht bilden kann.

Zur Erläuterung der Erfindung wird im folgenden auf die Figuren der Zeichnung Bezug genommen; im einzelnen zeigen

Figur 1 eine Gießform mit darin positionierten Formnadeln und von ihnen getragenen Antriebselementen zum Gießen eines Schreibkopfes für eine Tintenmosaikschreibeinrichtung und die

Figuren 2 bis 5 jeweils unterschiedlich beschichtete Formnadeln im Bereich ihrer Spitzen.

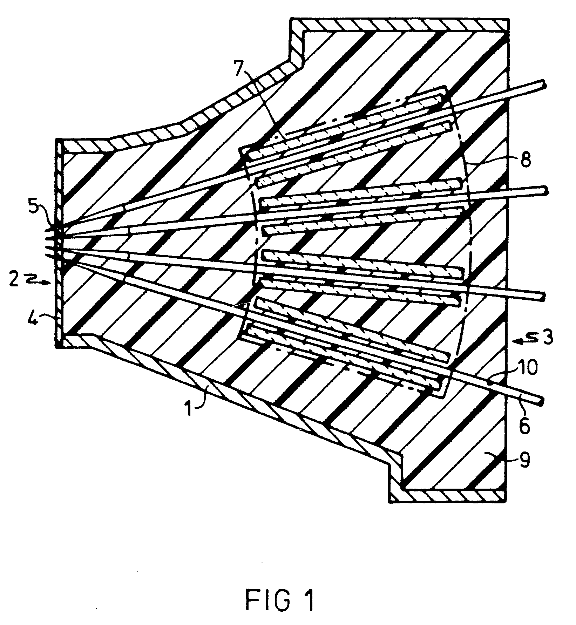

Figur 1 zeigt eine im wesentlichen trichterförmige Gießform 1 mit zwei Trichteröffnungen 2 und 3, von denen die kleinere Trichteröffnung 2 mit einer Zentrierplatte 4 abgeschlossen wird. Die Zentrierplatte 4 enthält Bohrungen 5 entsprechend der gewünschten Anordnung der Kanalaustritte (Düsenanordnung) bei dem zu fertigenden Schreibkopf. Auf einzelne Formnadeln 6 werden aus röhrchenförmigen Piezokeramiken bestehende Antriebselemente 7 aufgesteckt; die Formnadeln werden mit ihren Spitzen in den Bohrungen 5 der Zentrierplatte 4 zentriert und entsprechend der gewünschten Lage der in dem Schreibkopf auszubildenden Tintenkanäle innerhalb der Gießform 1 ausgerichtet. Es ist auch möglich, die Antriebselemente 7 in einer Halterung zu einer hier lediglich durch eine strichpunktierte Umrandung angedeuteten Baugruppe 8 zusammenzufassen, die Baugruppe 8 in der Gießform 1 zu befestigen und die einzelnen Formnadeln durch die Öffnungen der Antriebselemente 7 hindurch bis in die Bohrungen 5 der Zentrierplatte 4 zu führen. Anschließend wird die Gießform von ihrer großen Trichteröffnung 3 her mit einer Gießmasse (vorzugsweise Gießharz) aufgefüllt; nach dem Aushärten der Gießmasse zu einem Gießkörper 9 werden die Formnadeln 6 aus dem Gießkörper 9 herausgezogen, so daß in diesem Tintenkanäle 10 jeweils über einen Teil ihrer Länge von einem der Antriebselemente 7 umgeben verbleiben.

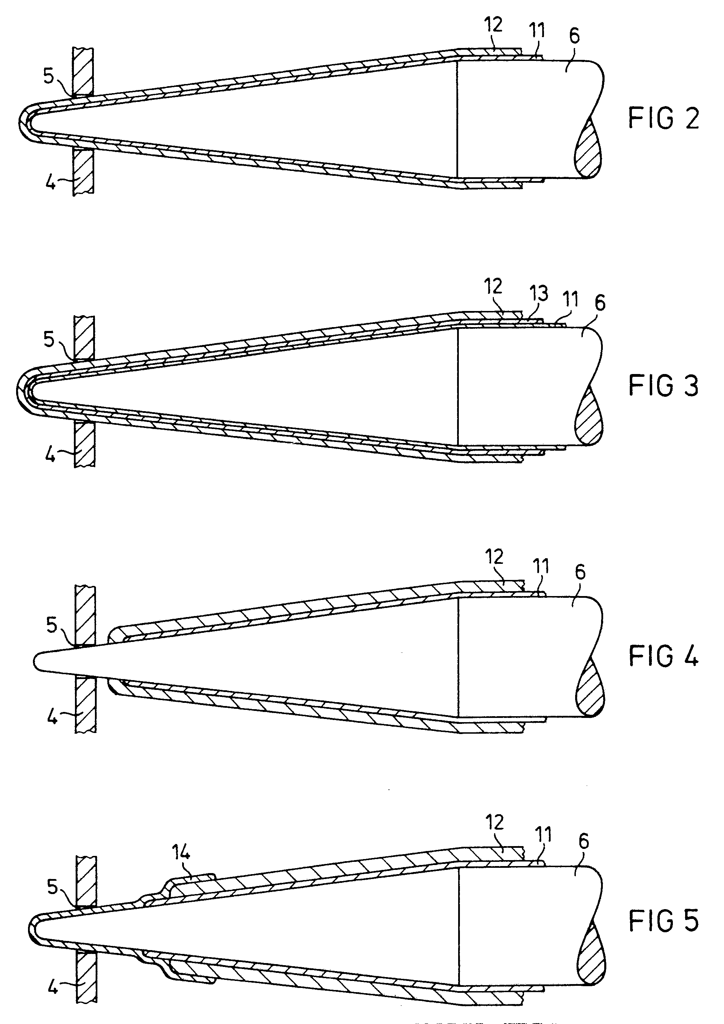

Um die Formnadeln 6 nach dem Ausgießen der Gießform 1 leicht entfernen zu können und um dabei glatte, rißfreie und schreibflüssigkeitsresistente Kanalinnenwände der Tintenkanäle 10 zu erhalten, werden die Formnadeln 6 entsprechend den Darstellungen in den Figuren 2 bis 5 vor ihrem Einstecken in die Antriebselemente 7 und ihrem Einbringen in die Gießform 1 zunächst mit einer Trennmittelschicht 11 und anschließend mit einer Hüllschicht 12 überzogen. Die Figuren 2 bis 5 zeigen dies am Beispiel einer derartig behandelten Formnadel 6, die mit ihrer Spitze in einer Bohrung 5 der Zentrierplatte 4 gehalten ist. Wie Figur 2 zeigt, können die Formnadeln 6 jeweils vollständig mit der Trennmittelschicht 11 und der darauf liegenden Hüllschicht 12 überzogen sein. Dazu werden die Nadeln mindestens in der mit der Gießmasse in Berührung kommenden Länge vollständig mit einer beispielsweise 0,5 μm dicken Trennschicht 11 aus Wachs überzogen; danach werden die Formnadeln durch Tauchen in eine Kunststofflösung mit einer etwa gleich dicken thermoplastischen Schicht als Hüllschicht 12 überzogen. Nach dem Vergießen mit der Gießmasse und nach deren Aushärten werden die Formnadeln bei einer Temperatur des Gießkörpers 9 entformt, bei der die Trennschicht 11 eine sehr geringe Schubfestigkeit aufweist; dabei läßt die geringe Festigkeit des Wachses auch bei Raumtemperatur noch eine beschädigungsfreie Entformung zu. Es ist jedoch möglich, anstelle eines Wachses einen nichtorganischen Stoff mit geringer Schubfestigkeit, wie z. B. $MoS_2$ oder eine niedrigschmelzende Metallegierung als Trennschicht 11 aufzubringen. Ebenso ist es möglich, die Hüllschicht 12 aus Metall herzustellen, indem sie auf die trennmittelbeschichteten Formnadeln 6 aufgewalzt oder galvanisch abgeschieden wird. Die nach Entformung der Formnadeln 6 in dem Gießkörper 9 als Kanalinnenwände zurückbleibenden Hüllschichten 12 werden anschließend von Resten der Trennschicht 11 gereinigt.

Entsprechend der Darstellung in Figur 3 kann die Reinigung der Tintenkanäle 10 dadurch verbessert werden, daß vor dem Aufbringen der Hüllschicht 12 auf die Trennschicht 11 eine spülmittellösliche Zwischenschicht 13 aufgebracht wird. Die Zwischenschicht 13 kann wahlweise wasserlöslich sein, wobei als Spülmittel beispielsweise heißes Wasser mit einem Zusatz verwendet wird, oder aus einem Kunststoff bestehen, der durch ein Lösungsmittel entfernt werden kann. Damit ist die Entformbarkeit der Formnadeln 6 durch die Trennschicht 11 gewährleistet, während die Zwischenschicht 13 die rückstandslose Reinigung der Tintenkanäle 10 erleichtert.

Wie die Figuren 4 und 5 zeigen, lassen sich besonders kleine Kanalaustrittsöffnungen der Tintenkanäle 10 in einem sehr engen Düsenraster herstellen, indem die die Kanalaustrittsbereiche der Tintenkanäle 10 bildenden Spitzen der Formnadeln 6 von der Trennschicht 11 und der Hüllschicht 12 unbedeckt gelassen werden. Bei dem in Figur 4 gezeigten Beispiel überdeckt dabei die Hüllschicht 12 den Endbereich der Trennschicht 11 vollständig, so daß beim Ausgießen der Gießform 1 mit der Gießmasse kein Gießharz in einen sich durch Schmelzen der Trennschicht 11 bildenden Spalt zwischen der Hüllschicht 12 und der Formnadel 6 fließen kann. Bei dem in Figur 5 gezeigten Beispiel wird dieses dadurch verhindert, daß die Spitzen der Formnadeln 6 mit einer den Endbereich der Hüllschicht 12 bedeckenden zweiten Trennschicht 14 überzogen werden, die aufgrund ihrer Dünne die Feinheit des mit den Kanalaustrittsbereichen zu erzeugenden Düsenrasters nur unwesentlich beeinflußt.

**Patentansprüche**

1. Verfahren, bei dem zum Ausbilden von Tintenkanälen (10) in einem Schreibkopf für eine Tintenmosaikschreibeinrichtung jeweils mit einem Trennmittel beschichtete und von piezoelektrischen Antriebselementen (7) zylindrisch umfaßte Formnadeln in einer Gießform (1) entsprechend dem gewünschten Verlauf der auszubildenden Tintenkanäle ausgerichtet werden, mit einer Gießmasse umgossen werden und nach deren Aushärten unter Bildung der jeweils von den zugeordneten piezoelektrischen Antriebselementen (7) teilweise umfaßten Tintenkanäle (10) entfernt werden, **dadurch gekennzeichnet, daß** auf die trennmittelbeschichteten Formnadeln (6) vor ihrem Einbringen in die Gießform (1) jeweils eine Hüllschicht (12) aufgebracht wird, die nach Entfernung der Formnadeln (6) und des Trennmittels die Kanalinnenwand des betreffenden Tintenkanals (10) bildet.

2. Verfahren nach Anspruch 1, **dadurch gekennzeichnet, daß** als Hüllschicht (12) eine Kunststoffschicht aufgebracht wird.

3. Verfahren nach Anspruch 1, **dadurch gekennzeichnet, daß** als Hüllschicht (12) eine Metallschicht aufgebracht wird.

4. Verfahren nach einem der vorangehenden Ansprüche, **dadurch gekennzeichnet, daß** vor dem Aufbringen der Hüllschicht (12) eine spülmittellösliche Zwischenschicht (13) auf der Trennschicht (11) aufgebracht wird und nach dem Entfernen der Formnadeln (6) zusammen mit dem Trennmittel aus den Tintenkanälen (10) ausgespült wird.

5. Verfahren nach einem der vorangehenden Ansprüche, **dadurch gekennzeichnet, daß** die die Kanalaustrittsbereiche der Tintenkanäle (10) bildenden Spitzen der Formnadeln (6) von der Trennschicht (11) und der Hüllschicht (12) unbedeckt gelassen werden und daß der Endbereich der Trennschicht (11) vollständig mit der Hüllschicht (12) überdeckt wird.

6. Verfahren nach einem der Ansprüche 1 bis 4, **dadurch gekennzeichnet, daß** die die Kanalaustrittsbereiche der Tintenkanäle (10) bildenden Spitzen der Formnadeln (6) von der Trennschicht (11) und der Hüllschicht (12) unbedeckt gelassen werden und daß die Spitzen der Formnadeln (6) mit einer den Endbereich der Hüllschicht (12) bedeckenden zweiten Trennschicht (14) überzogen werden.

87 P 4076

FIG 1

87 P 4076

FIG 2

FIG 3

FIG 4

FIG 5

Europäisches
Patentamt

# EUROPÄISCHER RECHERCHENBERICHT

Nummer der Anmeldung

EP 88 73 0180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 248 823 (L. BADER et al.)<br>* Insgesamt *<br>--- | 1 | B 41 J 3/04<br>B 29 C 37/00 |
| A | EP-A-0 145 880 (NIXDORF COMPUTER AG)<br>* Zusammenfassung; Figuren 1-5 *<br>--- | 1 | |
| A | GB-A-1 167 690 (FORD MOTOR CO.)<br>--- | | |
| A | EP-A-0 103 841 (SIEMENS AG)<br>--- | | |
| A | EP-A-0 042 932 (IBM)<br>----- | | |

RECHERCHIERTE
SACHGEBIETE (Int. Cl.4)

B 41 J
B 29 C

Der vorliegende Recherchenbericht wurde für alle Patentansprüche erstellt

| Recherchenort | Abschlußdatum der Recherche | Prüfer |
|---|---|---|
| DEN HAAG | 09-11-1988 | VAN DEN MEERSCHAUT G. |